# EUROPEAN PATENT SPECIFICATION

(11) **EP 1 773 964 B1**
(45) Date of publication and mention of the grant of the patent: **01.08.2012**
(21) Application number: 05804876.0
(22) Date of filing: 02.06.2005
(51) Int. Cl.: C09K 8/68

(54) **MULTICOMPONENT VISCOELASTIC SURFACTANT FLUID AND METHOD OF USING AS A FRACTURING FLUID**
MEHRKOMPONENTIGES VISKOELASTISCHES TENSIDFLUID UND VERWENDUNGSVERFAHREN ALS FRAKTURIERUNGSFLUID
FLUIDE TENSIOACTIF VISCOELASTIQUE A COMPOSANTS MULTIPLES ET SON PROCEDE D'UTILISATION COMME UN FLUIDE DE FRACTURATION

(30) Priority: 02.06.2004 US 576124 P; 01.06.2005 US 141853
(43) Date of publication of application: 18.04.2007
(73) Proprietor: Rhodia, Inc., Cranbury, NJ 08512 (US)
(72) Inventor: FANG, Li, Pleasanton CA 94588 (US); DAHANAYAKE, Manilal, S., Princeton Junction, NJ 08550 (US); COLACO, Allwyn, South River, NJ 08882 (US)
(74) Representative: Gillard, Richard Edward
(86) International application number: PCT/US2005/019417
(87) International publication number: WO 2005/118743

(56) References cited:
- US-A1- 2002 023 752
- US-A1- 2003 019 627
- US-B1- 6 569 829

## Description

### BACKGROUND OF THE INVENTION

### 1. Field of the invention

The present invention relates to a viscoelastic fluid. The present invention further relates to a method of fracturing a subterranean formation with a viscoelastic fluid.

### 2. Description of the Related Art

Viscoelastic surfactant (VES) fluids have continued to grow in use in oilfield applications because of their advantages over conventional polymer systems. Such advantages include higher permeability in the oil bearing zone, lower formation or subterranean damage, higher viscosifier recovery after fracturing, elimination of need for enzymes or oxidizers to break down viscosity, and easier hydration and faster build-up to optimum viscosity.

Growth in the use of VES fluids has been inhibited by the high cost of surfactants required to formulate such fluids. Another problem with use of VES fluids is their low tolerance of organic/inorganic salts and clay stabilizers, such as potassium chloride and tetramethyl ammonium chloride (TMAC), in subterranean formations. Another problem with use of VES fluids is the high temperatures encountered in deep well oilfield applications, i.e. up to 250° C. High temperatures can break down the viscosity of VES fluids and render them ineffective in fracturing operations when viscoelastic surfactants are present at low concentrations or require use of high Viscoelastic surfactant concentrations to avoid such viscosity breakdown. Use of viscoelastic surfactants at low concentrations also can result in unacceptably long shear recovery time after high shear operation.

In the prior art, attempts have been made to remedy breakdown in viscosity performance by adding polymers and/or cosurfactants, such as low molecular weight anionic polymers. However, shear recovery can be unacceptably long and/or organic/inorganic salt tolerance may be inadequate.

US 2002/0023752 and US 2003/0019627 disclose a method of fracturing a subterranean formation comprising providing an aqueous based hydraulic fracturing fluid including a thickener comprising:
(1) an aqueous medium;
(2) an effective amount of an inorganic water soluble salt, and
(3) an effective amount of at least one thickener in the fluid , the thickener being at least one viscosifying surfactant selected from the group consisting of anionic, cationic, nonionic, zwitterionic and combinations thereof, with the proviso that cationic viscosifying surfactants are used in combination with an anionic, nonionic, and/or zwitterionic viscosifying surfactant.

Accordingly, it would be desirable to have a VES fluid that could be formulated on a coat-effective basis, i.e., with relatively low levels of viscoelastic surfactant. It would further be desirable to have a VES fluid that exhibits high tolerance with respect to organic/inorganic salts and clay stabilizers. It would still further be desirable to have a VES fluid with relatively low levels of viscoelastic surfactants that maintains a high level of viscosity performance at high temperatures and shear recovery comparable to fluids with a relatively high concentration of viscoelastic surfactants.

### SUMMARY OF THE INVENTION

It is an object of the present invention to have a viscoelastic fluid.

It is another object of the present invention to have a viscoelastic fluid useful in oilfield applications.

It is still another object of the present invention to have a viscoelastic surfactant fluid that can be formulated with a relatively low level of surfactant for cost-effective performance.

It is a further object of the present invention to have a viscoelastic fluid with high tolerance to organic/inorganic salts, such as KCl and TMAC and Ca++ and Mg++ ions.

It is yet a further object of the present invention to have a viscoelastic fluid that maintains a high level of viscosity performance at high temperatures.

It is a further objective of the present invention to have a viscoelastic surfactant fluid that exhibits good shear recovery after high shear operation.

According to this and other objects and advantages of the present invention, there is provided a viscoelastic fluid. The fluid has one or more selected cationic surfactants, one or more selected anionic polymers and/or anionic surfactants, one or more selected zwitterionic and/or amphoteric surfactants, and water.

The cationic surfactant is selected from i) certain quaternary salts and ii) certain amine oxides, iii) and combinations thereof.

The quaternary salts have the structural formula: 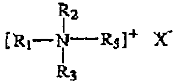 wherein R₁ is a hydrophobic moiety of alkyl, alkylarylalkyl, alkoxyalkyl, alkylaminoalkyl or alkylamidoalkyl, and wherein R₁ has from 12 to 25 carbon atoms and may be branched or straight-chained and saturated or unsaturated.

R₂, R₃, and R₅ are, independently, an aliphatic moiety having from 1 to 30 atoms or an aromatic moiety having from 7 to 15 atoms. The aliphatic moiety can be branched or straight-chained and saturated or unsaturated.

X is suitable counter-anion, such as Cl⁻, Br⁻, and CH₃CH₃SO₄^{-.}

The amine oxides have the following structural formula: 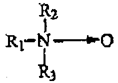 wherein R₁, R₂ and R₃ are as defined above.

The anionic polymer has 8 to 100 monomeric units and at least one negatively charged moiety. Sulfonated polymers are preferred. Anionic surfactants will have alkyl chains of 6 to 18 carbon atoms with at least one negatively charged moiety.

The zwitterionic surfactant has the following structural formula: 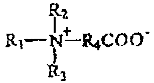 wherein R₁, R₂, and R₁ are as described above. R₄ is a hydrocarbyl radical with a chain length of 1 to 4 carbon atoms.

The amphoteric surfactant has the following structural formula: 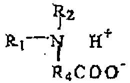 wherein R₁, R₂, and R₄ are as described above.

Another object of the present invention is to provide a method of fracturing a subterranean formation, comprising the step of pumping the viscoelastic fluid through a wellbore and into a subterranean formation at a pressure sufficient to fracture the formation.

### DETAILED DESCRIPTION OF THE INVENTION

The property of viscoelasticity in general is well known, and reference is made to S. Gravsholt, Journal of Coll. And Interface Sci., 57(3), 575 (1976); Hoffmann et al., "Influence of Ionic surfactants on the Viscoelastic Properties of Zwitterionic Surfactant Solutions", Langmuir, 8, 2140-2146 (1992) ; and Hoffmann et al., "The Rheological Behaviour of Different Viscoelastic Surfactant Solutions," Tenside Surf. Det., 31, 389-400, 1994. Several test methods have been specified in these references to determine whether a liquid possesses viscoelastic properties. One test that has been found useful in determining the viscoelasticity of an aqueous solution is swirling the solution and visually observing whether the bubbles created by the swirling recoil after the swirling is stopped. Any recoil of the bubbles indicates viscoelasticity. Another useful test is to measure the storage modulus (G') and the loss modulus (G") at a given temperature. If G'>G" is at some point or over some range of points below 10 rad/sec, typically between 0.001 to 10 rad/sec, more typically between 0.1 and 10 rad/sec, at a given temperature and if G¹>10⁻² Pascals, preferably 10⁻¹ Pascals, the fluid is typically considered viscoelastic at that temperature. Rheological measurement, such as G' and G", are discussed more fully in "Rheological Measurements", Encyclopedia of Chemical Technology, vol. 21, pp, 347-372, (John Wiley & Sons, Inc., N.Y., N.Y., 1997, 4th ed.).

Viscoelasticity is caused by a different type of micelle formation than the usual spherical micelles formed by most surfactants. Viscoelastic surfactant fluids form worm-like, rod-like or cylindrical micelles in solution. The formation of long, cylindrical micelles creates useful rheological properties. The viscoelastic surfactant solution exhibits shear thinning behavior, and remains stable despite repeated high shear applications.

The viscoelastic surfactants useful in the fluids of the present invention are selected zwitterionic surfactants and/or amphoteric surfactants and cationic surfactants. A zwitterionic surfactant has a permanently positively charged moiety in the molecule regardless of pH and a negatively charged moiety at alkaline pH. A cationic surfactant has a positively charged moiety regardless of pH. An amphoteric surfactant has both a positively charged moiety and a negatively charged moiety over a certain pH range (e.g., typically slightly acidic), only a negatively charged moiety over a certain pH range (e.g., typically slightly alkaline) and only a positively charged moiety at a different pH range (e.g., typically moderately acidic).

The selected viscoelastic surfactants and polymers to form a viscoelastic fluid that exhibits enhanced performance compared to conventional viscoelastic fluids. The viscoelastic fluid of the present invention can exhibit high viscosity levels at high temperatures and low viscoelastic surfactant levels and high tolerance for with respect to Ca⁺⁺ ions and clay stabilizers compared to conventional viscoelastic fluids, The viscoelastic fluid of the present invention exhibits enhanced performance compared to viscoelastic fluids having only the combination of the selected zwitterionic/amphoterie surfactants and cationic surfactants the combination of the zwitterionic/amphoteric surfactants and the selected anionic polymer/anionic surfactant, or the combination of the selected cationic surfactants and the selected anionic polymer/anionic surfactant.

The cationic surfactant is selected from i) certain quaternary salts and ii) certain amine oxide, iii) and combinations thereof.

The quaternary salts have the structural formula: 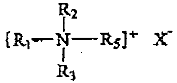 wherein R₁ is a hydrophobic moiety of alkyl, alkylarylalkyl, alkoxyalkyl, alkylaminoalkyl or alkylamidoalkyl. R₁ has from 18 to 30 carbon atoms and may be branched or straight-chained and saturated or unsaturated. Representative long chain alkyl groups include octadecentyl (oleyl), octadecyl (stearyl), docosenoic (erucyl) and the derivatives of tallow, coco, soya and rapeseed oils. The preferred alkyl and alkenyl groups are alkyl and alkenyl groups having from 18 to 22 carbon atoms.

R₂, R₃, and R₅ are, independently, an aliphatic group having from 1 to 30 carbon atoms or an aromatic group having from 7 to 15 carbon atoms. The aliphatic group preferably has from 1 to 20 carbon atoms, more preferably from 1 to 10 carbon atoms, and most preferably from 1 to 6 carbon atoms. Representative aliphatic groups include alkyl, alkenyl, hydroxyalkyl, carboxyalkyl, and hydroxyalkyl-polyoxyalkylene. The aliphatic group can be branched or straight-chained and saturated or unsaturated. Preferred alkyl chains are methyl and ethyl. Preferred hydroxyalkyls are hydroxyethyl and hydroxypropyl. Preferred carboxyalkyls are acetate and propionate. Preferred hydroxyalkyl-polyoxyalkylenes are hydroxyethyl-polyoxyethylene and hydroxypropyl-polyoxypzopylene. Examples of aromatic moieties include cyclic groups, aryl groups, and alkylaryl groups. A preferred alkylaryl is benzyl.

X is suitable anion, such as Cl⁻, Br⁻, and (CH₃)₂SO₄⁻.

Representative quaternary salts of the above structure include methylpolyoxyethylene(12-18)octadecanammonium chloride, methylpolyoxyethylene(2-12)cocoalkylamonium chloride, and isotridecyloxypropyl polyoxyethylene (2-12) methyl ammonium chloride.

The fluid also has an anionic polymer. The polymer has about 8 to about 100 monomeric units and at least one negatively charged moiety. Sulfonated polymers are preferred, Representative anionic polymers include, but are not limited to, polynapthalene sulfonate, sulfonated polystyrenes, and sulfonated styrene/maleic anhydride copolymers. A most preferred anionic polymer is polynapthalene sulfonate and has the following structural formula: 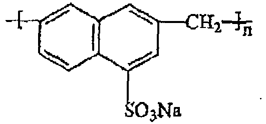 wherein n is an integer from 8 to 100. Preferred polynapthalene sulfanates have a weight average molecular weight of from 2,000 to 20,000.

Another preferred anionic polymer are polyalkylene sulfonates having the following structural formula: 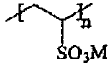 wherein n is an integer from a to 100. M is an inorganic or organic cation, such as alkaline metal or ammonium ions, e.g. K⁺, Na⁺, and NH₄⁺.

Selected anionic surfactants useful in the viscoelastic surfactant fluid of the present invention include those having alkyl chains of 6 to 18 carbon atoms with at least one negatively charged moiety.

Representative anionic surfactants include those of the following structural formulas;

R₆—[O(EO)ₐ(PO)_{b}]ₘ—SO₃⁻ Y⁺

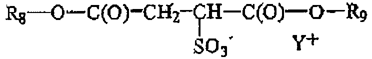

R₆-[O(EO)ₐ(PO)_{b}]ₘ-CH₂-C(O)-O⁻ Y⁺

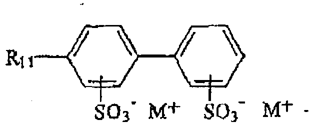

and combinations thereof.

R₆ is selected from a group consisting of alkyl, aryl, alkaryl, alkylarylalkyl, arylalkyl, alkylamidoalkyl, alkylaminoalkyl, wherein the alkyl group has from 6 to 18 carbon atoms; wherein the aryl group represents a phenyl, diphenyl, diphenylether, or naphthalene moiety; and wherein the total carbon atom content of R₆ is no more than 18 carbon atoms. R₆ is preferably C₁₀ to C₁₈ alkyl or alkylamidoalkyl. R₆ can be represented by octyl, nonyl, decyl, dodecyl and the like, substitutes from natural sources having mixed carbon chain lengths can be used or purified to reduce the number of carbon chain lengths in the alkyl groups. Preferred alkylamidoalkyls are coco/lauryl amidopropyl, oleyl/stearyl amidopropyl, actylamidopropyl, and decylamidopropyl.

M represents hydrogen, an alkali metal such as sodium or potassium, or -[R₇-(EO)ₐ(PO)_{b}(BO)_{c}]ₘ-O-]_{q}-P(O)(OM)₂.

Y represents a counter-ion, which is preferably an alkali metal such as sodium or potassium, more preferably sodium; EO represents ethyleneoxy radicals, PO represents propyleneoxy radicals. BO represents butoxy radicals, The letters a, b, and c are, independently, integers from 0 to 50, wherein "a" is preferably an integer from 0 to 15 and "b" is preferably an integer from 0 to 10, and "c" is preferably an integer from 0 to 10, wherein EO, PO and BO, radicals can be randomly mixed or in the discrete blocks. "m" is 0 or 1. "R₇" is C₈ to C₁₈ alkylene. R₈ is C₈ - C₁₈ alkyl or C₈ - C₁₈ alkylamido. "R₉" is C₁ - C₄ alkyl or Y (counter-ion). R₁₀ is C₁₀ - C₁₄ alkyl. "q" is an integer from 1 to 10.

Selected zwitterionic surfactants useful in the viscoelastic surfactant fluid of the present invention are represented by the following structural formula: 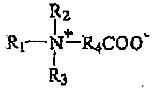 wherein R₁ is as described above. R₂ and R₃ are, independently, an aliphatic moiety having from 1 to 30 carbon atoms or an aromatic moiety having from 7 to 15 carbon atoms. The aliphatic moiety preferably has from 1 to 20 carbon atoms, more preferably from 1 to 10 carbon atoms, and most preferably from 1 to 6 carbon atoms. The aliphatic group can be branched or straight chaired and saturated or unsaturated. Representative aliphatic groups include alkyl, alkenyl, hydroxyalkyl, carboxyalkyl, and hydroxyalkyl-polyoxyalkylene. Preferred alkyl chains are methyl and ethyl. Preferred hydroxyalkyls are hydroxyethyl and hydroxypropyl. Preferred carboxyalkyls are acetate and propionate. Preferred hydroxyalkyl-polyoxyalkylenes are hydroxyethyl-polyoxyethylene or hydroxypropyl-polyoxypropylene). R₄ is a hydrocarbyl radical (e.g. alkylene) with chain length 1 to 4 carbon atoms: Preferred are methylene or ethylene groups. Examples of aromatic moieties include cyclic groups, aryl groups, and alkylaryl groups. A preferred arylalkyl is benzyl.

Specific examples of selected zwitterionic surfactants include the following structures: 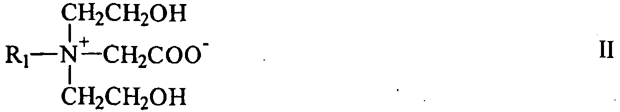 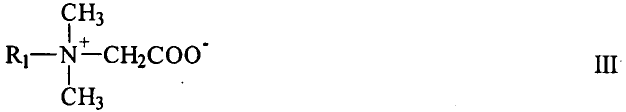 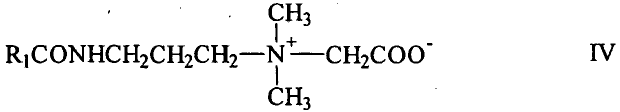 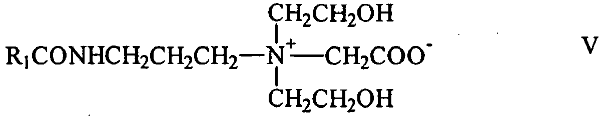 wherein R₁ is as described above.

Other representative zwitterionic surfactants include dihydroxyethyl tallow glycinate, oleamidopropyl betaine, and erucyl amidopropyl betaine.

Selected amphoteric surfactants useful in the viscoelastic surfactant fluid of the present invention are represented by the following structural formula: 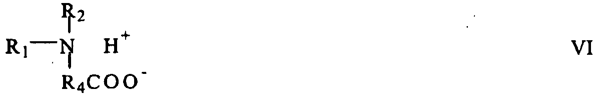 wherein R₁, R₂, and R₄ are as described above.

Specific examples of amphoteric surfactants include those of the following structural formulas: 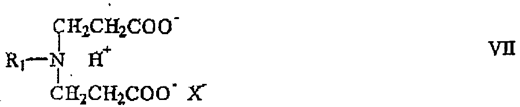 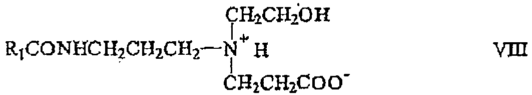 wherein R₁ is as described above. X⁺ is an inorganic cation such as Na⁺, K⁺, NH₄⁺ associated with a carboxylate group or hydrogen atom in an acidic medium.

The selected zwitterionic and amphoteric surfactants are functionally interchangeable and may be used separately or alone (alternatively) or in combination with each other. Additional teachings to the selected zwitterionic and amphoteric surfactants are disclosed in U.S. Patent No. 6,258,859 B1.

The surfactants are used in an amount, which, in combination with the other ingredients, such as the anionic polymer, is sufficient to form a viscoelastic fluid, which amount will typically be a minor amount by weight of the fluid (e.g., less than 50% by weight). The total concentration of the selected zwitterionic/amphoteric and cationic surfactants typically ranges from 0.1 to 10 wt%, more typically from 0.1 to 5 wt%, and even more typically from 0.25 to 2 wt% based on the weight of the fluid. The weight percentage of the cationic surfactant in the total active surfactant (exclusive of solvents) typically ranges from about 1 to 40 wt%, more typically from 3 to 20 wt%, and even more typically from 5 to 20 wt% (based on total required cationic surfactant and zwitterionic/amphoteric surfactant of the present invention). Because of the cost of the surfactants, it is desirable, if possible, to minimize surfactant concentration. Most preferably, the concentration of the selected zwitterionic/amphoteric and cationic surfactants will be less than 3 wt% based on fluid weight. The selected anionic polymer is typically used at 0.01 to 5 wt%, more typically 0.05 to 3 wt%, and most typically 0,1 to 0.5 wt% based on weight of the fluid. Optimum concentrations for the selected surfactants and anionic polymers can be determined experimentally for a particular fluid system.

The viscoelastic fluid 18 aqueous. Water is preferably present in an amount by weight 50 percent or more by weight of the fluid. Most preferred fluids have 70 weight percent or more of water by weight of the fluid. The water can be from any source so long as the source has no contaminants incompatible with the other components of the viscoelastic fluid (e.g., such as to cause undesirable precipitation). Thus, the water need not be potable and may be brackish or contain other materials typical of sources of water found in or near oil fields.

The fluid optionally has one or more members from the following group: organic acids, organic acid salts, inorganic salts, and combinations thereof. This member will typically be present in a minor amount (e.g., 20 wt% or less by weight of the fluid).

The organic acid is typically a sulfonic acid or a carboxylic acid and the anionic counter-ion of the organic acid salts are typically sulfonates or carboxylates. Representative of such organic molecules include various aromatic sulfonates and carboxylates such as p-toluene sulfonate, naphthalene sulfonate, chlorobenzoic acid, salicylic acid, phthalic acid and the like, where such counter-ions are water-soluble. Most preferred are salicylate, phthalate, p-toluene sulfonate, sodium xylene sulfonates, hydroxynaphthalene carboxylates, e.g. 5-hydroxy-1-naphthoic acid, 6-hydroxy-1-naphthoic acid, 7-hydroxy-1-naphthoic acid, 1-hydroxy-2-naphthoic acid, preferably 3-hydroxy-2-naphthoic acid, 5-hydroxy-2-naphthoic acid, 7-hydroxy-2-naphthoic acid, and 1,3-dihydroxy-2-naphthoic acid and 3,4-dichlorobenzoate. The organic acid or salt thereof typically aids the development of increased viscosity which is characteristic of preferred fluids. Although no bound by any theory, the association of the organic acid or salt thereof with the micelle might decrease the aggregation curvature of the micelle, and, thus, promote the formation of a worm-like or rod-like micelle. The organic acid or salt thereof will typically be present in the viscoelastic fluid at a weight concentration of from 0.1 wt% to 10 wt%, more typically from 0.1 wt% to 7 wt%, and even more typically from 0,1 wt% to 6 wt% based on fluid weight.

The inorganic salts that are particularly suitable for use in the viscoelastic fluid include water-soluble potassium, sodium, or ammonium salts, such as potassium chloride or ammonium chloride. Potassium chloride is most preferred. Additionally, calcium chloride, calcium bromide and zinc halide salts may also be used. The inorganic, salts may aid in the development of increased viscosity, which is characteristic of preferred fluids. Further, the inorganic salt may assist in maintaining the stability of a geologic or subterranean formation to which the fluid is exposed. Formation stability, in particular clay stability (by inhibiting hydration of the clay), can be achieved at a concentration levels of a few percent by weight or less.
Thus, density of fluid is usually not significantly altered by the presence of the inorganic salt. If fluid density is an important consideration, heavier inorganic salts may be used. The inorganic salt will typically be present in the viscoelastic fluid at a weight concentration of from 0.1% to 30%, more typically from 0.1% to 10%, and even more typically from 0.1% to 8%. Organic salts, e.g. trimethylammonium hydrochloride and tetramethylammonium chloride, may also be useful in addition to, or as a replacement for, the inorganic salts.

As an alternative to the organic salts and inorganic salts, or as a partial substitute therefor, one can use a medium to long chain alcohol (preferably an alkanol), preferably having five to ten carbon atoms, or an alcohol ethoxylate (preferably an alkanol ethoxylate) preferably of a 12 to 16 carbon alcohol and having 1 to 6, preferably 1-4, oxyethylene units.

The viscoelastic surfactant solution is useful as a fracturing fluid or water-based hydraulic fluid. The viscoelastic fluid used as a fracturing fluid may optionally contain a gas such as air, nitrogen or carbon dioxide to provide an energized fluid or a foam.

When used as a hydraulic fracturing fluid, the viscoelastic fluid may contain other conventional constituents that perform specific desired functions, e.g., corrosion inhibition, fluid-loss prevention and the like. A proppant can be suspended in the fracturing fluid. The pH of the fluid will typically range from strongly acidic (e.g., less than a pH of about 3) to slightly alkaline (e.g., from a pH just greater than 7.0 to 8.5, more typically to 8.0) or moderately alkaline (e.g., a pH of 8.5 to 9.5).

The viscoelastic fluid may optionally have one or more additional thickeners and fluid-loss control additives known in the industry, such as water-soluble or water-dispersible polymers (guar and guar derivatives, xanthan, polyacrylamide, starch and starch derivatives, cellulosic derivatives, polyacrylates, polyDADMAC [poly(diallyl dimethyl ammonium chloride] and combinations thereof), and clay (Bentonite and attapulgite).

The viscoelastic fluid may optionally have conventional surfactants/cosurfactants other than the viscoelastic surfactants described above. Such surfactants/cosurfactants can include anionic, cationic, nonionic, zwitterionic, and amphoteric species. The fluid may also have any solvent or vehicles known in the art (in addition to water), such as lower monohydric alcohols, polyhydric alcohols, and the like.

The viscoelastic fluid is useful in conventional hydraulic fracturing methods. Useful methods are disclosed in U.S. Pat. No. 5,551,516. Oil-field applications and methods are also described in "Oil-field Applications", Encyclopedia of Polymer Science and Engineering, vol. 10, pp. 328-366 (John Wiley & Sons, Inc., New York, N.Y., 1987).

Hydraulic fracturing refers to methods used to stimulate the production of fluids, such as oil and natural gas, from subterranean formations. In hydraulic fracturing, a fracturing fluid is injected through a wellbore and against the face of the formation at a pressure and flow rate at least sufficient to overcome the overburden pressure and to initiate and/or extend a fracture(s) into the formation. The fracturing fluid usually carries a proppant such as 20-40 mesh sand, bauxite, glass beads, and the like, suspended in the fracturing fluid and transported into a fracture. The proppant keeps the formation from closing back down upon itself when pressure is released. The proppant filled fractures provide permeable channels through which the formation fluids can flow to the wellbore and thereafter be withdrawn. Viscoelastic fluids have also been extensively used in gravel pack treatment.

The following are examples of the present invention. They are illustrative of the invention and are not to be construed as limiting. Unless otherwise indicated, all percentages or parts are by weight.

### EXAMPLES

Fluids of the present invention were prepared and tested for viscosity performance as a function of temperature. Viscosity performance related to suitability for use in fracturing applications.

The zwitterionic surfactant employed was erucyl amidopropyl betaine (EAB). The anionic polymer employed was polynapthalene sulfonate (DAXAD 19 polymer manufactured by Hampshire Chemical Corp.). The cationic surfactant employed was methylpolyoxyethylene octadecanammonium chloride (OAED). All ingredients were formulated by mixing.

A fluid of the following formulation was tested: 27 wt% EAB/ 3.8 wt% DAXAD 19/ 3.9 wt% OAED (balance is solvents).

The fluid showed very good viscosity performance at the 2.1 wt% surfactant use level (0.9 wt% active) up to 102° C (215° F) with very good shear recovery (less than 15 seconds). The system was compatible with 2 wt% KCl (potassium chloride), 2 wt% KCl with 500 ppm Ca⁺⁺, 0.1 wt% TMAC (trimethyl ammonium chloride) and 0.1 wt% TMAC with 300ppm Ca⁺⁺. The three components were formulated together with IPA and water with very good stability and flowability in the temperature range from -7° C to 66° C (20° F to 150° F).

Additional fluids were formulated.

Four fluids of the present invention were formulated as follows: I) 1.1 wt% EAB/0.14 wt% DAXAD 19 / 0.15 wt% OAED in 2 wt% KCl (balance is solvents); II) 0.76 wt% EAB/0.14wt% DAXAD 19/ 0.1 wt% OAED in 2 wt% KCl (rest are solvents); III) 0.76 wt% EAB/0.14wt% DAXAD 19/ 0.1 wt% OAEDin 2 wt% KCl/500 ppm Ca++(balance is solvents); and IV) 0.76 wt% EAB/0.14 wt% DAXAD 19/ 0.1 wt% OAED in 0.1 wt% TMAC (balance is solvents). A comparative fluid was formulated as follows with only 2.3 wt% EAB in 2 wt% KCl (balance is solvents).

An additional fluid of the present invention and three comparative fluids were formulated and their viscosity performance versus temperature tested. A fluid of the present invention was formulated as follows: 1.1 wt% EAB/0-14wt% DAXAD 19 / 0.15 wt% OAED in 2 wt% KCl (balance is solvents). Three comparative fluids were formulated as follows: I) 1.1 wt% EAB / 0.15 wt% OAED in 2 wt% KCl (balance is solvents); II) 1.1wt% EAB / 0.14 wt% DAXAD 19 in 2 wt% KCl(balance is solvents); and III) 1.1 wt% EAB / 0.14 wt% of DAXAD 19 / 0.15 wt% Alkaquat DMB-451 (benzyl triammonium chloride made by Rhodia Inc.) in 2 wt% KCl (balance is solvents).

It should be understood that the foregoing description is only illustrative of the present invention. Various alternatives and modifications can be devised by those skilled in the art without departing from the invention. Accordingly, the present invention is intended to embrace all such alternatives, modifications and variances that fall within the scope of the appended claims.

## Claims

1. A viscoelastic fluid, comprising:
one or more cationic surfactants;
one or more anionic polymers or one or more anionic surfactants having alkyl chains of 6 to 18 carbon atoms with at least one negatively charged moiety;
one or more zwitterionic and/or amphoteric surfactants; and
water; wherein the one or more cationic surfactants is selected from the group consisting of
i) quaternary salts having the following structural formula: 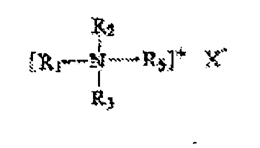 wherein R₁ is a hydrophobic moiety of alkyl, alkylarylalkyl, alkoxyalkyl, alkylaminoalkyl or alkylamidoalkyl, where in R₁ has from 18 to 30 carbon atoms and may be branched or straight-chained and saturated or unsaturated; R₂, R₃, and R₅ are, independently, selected from the group consisting of an aliphatic moiety having from 1 to 30 carbon atoms and an aromatic moiety having from 7 to 30 carbon atoms; the aliphatic moiety being branched or straight-chained and saturated or unsaturated;
wherein X is a counter-anion;
ii) amine oxides having the following structural formula: 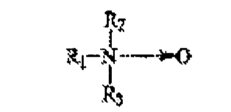 wherein R₁, R₂, and R₃ are as defined above; and
iii) combinations thereof;
wherein the zwitterionic surfactant has the following structural formula: 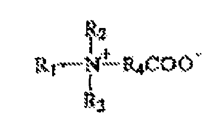 wherein R₁, R₂, and R₃ are as described above; R₄ is a hydrocarbyl radical with a chain length 1 to 4;
and wherein the amphoteric surfactant has the following structural formula: 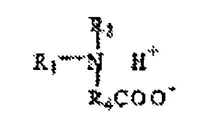 wherein R₁, R₂, and R₄ are as described above.

2. The fluid of claim 1, wherein the one or more cationic surfactants is one or more quaternary salts.

3. The fluid of claim 2, wherein the quaternary salt is methylpolyoxyethylene octadecanammonium chloride.

4. The fluid of claim 1, wherein the one or more cationic surfactants is selected from the group consisting of methylpolyoxyethylene octadecanammonium chloride, methylpolyoxyethylene cocoalkylammonium chloride and isotridecyloxypropyl polyoxyethylene methyl ammonium chloride.

5. The fluid of claim 1, wherein the one or more cationic surfactants is present at from 1 to 40 wt% based on weight of active surfactant.

6. The fluid of claim 1, wherein the one or more cationic surfactants is present at from 5 to 20 wt% based on weight of active surfactant.

7. The fluid of claim 1, wherein the one or more anionic polymers is present at from 0.01 to 5 wt% based on fluid weight.

8. The fluid of claim 1, wherein the one or more zwitterionic surfactants is selected fro the group consisting of the following structural formulas: 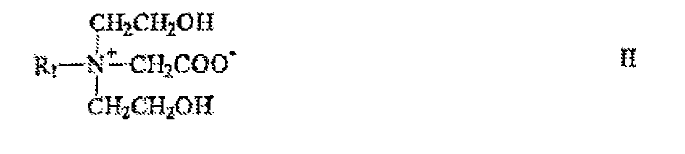 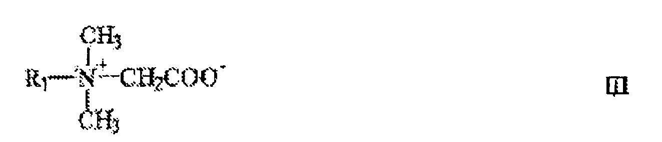 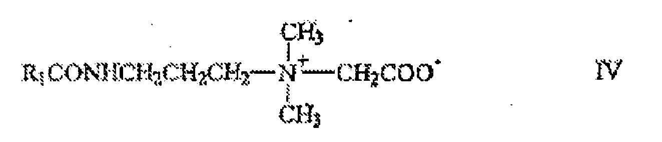 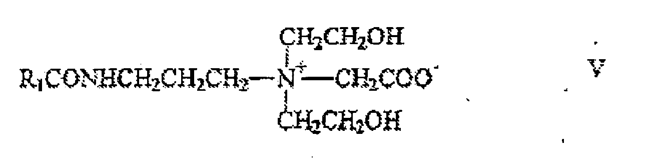 and combinations thereof.

9. The fluid of claim 1, wherein the one or more zwitterionic surfactants is erucyl bis(2-hydroxyethyl)methyl ammonium chloride.

10. The fluid of claim 1, wherein the water is present at 50 wt% or more based on fluid weight.

11. The fluid of claim 1, wherein the water is present at 70 wt% or more based on fluid weight.

12. The fluid of claim 1, wherein the one or more cationic surfactants and the one ore more zwitterionic and/or amphoteric surfactants are present at 0.1 to 10 wt% based on fluid weight.

13. The fluid of claim 1, wherein the one or more cationic surfactants and the one or more zwitterionic and/or amphoteric surfactants are present at 0.25 to 2 wt% based on fluid weight.

14. The fluid of claim 1, wherein the one or more cationic surfactants and the one or more zwitterionic and/or amphoteric surfactants are present at less than 2 wt% based on fluid weight.

15. The fluid of claim 1, further comprising a component selected from the group consisting of organic acids, organic acid salts, inorganic salts, and combinations thereof.

16. The fluid of claim 15, wherein the component is selected from the group consisting of potassium chloride and trimethylammonium chloride.

17. The fluid of claim 15, wherein the component is present at 0.1 wt% to 10 wt% based on fluid weight.

18. The fluid of claim 1 or 15, further comprising a proppant.

19. The fluid of claim 1, wherein the one or more anionic polymer has the following structural formula: 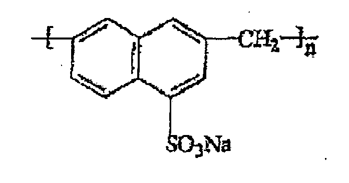 wherein n is an integer from 8 to 100.

20. The fluid of claim 1, wherein the one or more anionic polymers has the following structural formula: 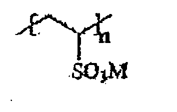 wherein n is an integer from 8 to 100.

21. The fluid of claim 1, wherein the one or more anionic polymers is present at from 0.1 wt% to 5 wt% based on fluid weight.

22. The fluid of any of claims 19 and 20, wherein the one or more anionic polymers is present at from 0.1 wt% to 5 wt% based on fluid weight.

23. The fluid of claim 1, wherein the one or more cationic surfactants is present at from 1 to 40 wt% based on weight of the active surfactant, wherein the anionic polymer is present at from 0.1 wt% to 5 wt% based on fluid weight, wherein the water is present at 50 wt% or more based on fluid weight, wherein the one or more cationic surfactants and the one or more zwitterionic and/or amphoteric surfactants are present at 0.1 to 10 wt% based on fluid weight, the fluid further comprising a component selected from the group consisting of organic acids, organic acid salts, inorganic salts, and combinations thereof, wherein the component is present at 0.1 wt% to 10 wt% based on fluid weight.

24. The fluid of claim 1 or 21, wherein R₁ is an alkyl or alkenyl group having 18 to 22 carbon atoms, and wherein R₂, R₃ and R₅, independently, each have 1 to 6 carbon atoms.

25. The fluid of claim 1, wherein the anionic surfactant has the following structural formula selected from the group consisting of:
R₆—[O(EO)ₐ(PO)_{b}]ₘ—SO₃⁻Y⁺ 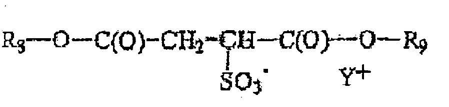
R₆—[O(EO)ₐ(PO)_{b}]ₘ—CH₂—C(O)—O⁻ Y⁺ 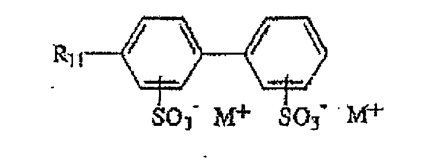
and combinations thereof;
wherein R₆ is selected from a group consisting of alkyl, aryl, alkaryl, alkylarylalkyl, arylalkyl, alkylamidoalkyl, alkylaminoalkyl; wherein the alkyl group has from 6 to 18 carbon atoms; wherein the aryl group represents a phenyl, diphenyl, diphenylether, or naphthalene moiety; wherein the total carbon atom content of R₆ is no more than 18 carbon atoms; wherein M is selected from the group consisting of hydrogen, and alkali metal, and -[R₇-(EO)ₐ(PO)_{b}(BO)_{c}]ₘ-O-]_{q}-P(O) (OM)ₐ; wherein Y
is a counter-ion; wherein EO is an ethyleneoxy radical; wherein PO is a propyleneoxy radical; wherein BO is a butoxy radical; wherein each of the EO, PO and BO radicals can be randomly mixed or in discrete blocks; wherein a, b, and c are, independently, integers from 0 to 50; wherein "m" is 0 or 1; wherein "R₇" is C₈ to C₁₈ alkylene; wherein R₈ is C₈ - C₁₈ alkyl or C₈ - C₁₈ alkylamido; wherein "R₉" is C₁ to C₄ alkyl or Y; wherein R₁₀ is C₄ - C₈ alkyl; and wherein "q" is an integer from 1 to 10.

26. A method of fracturing a subterranean formation, comprising the step of pumping a viscoelastic fluid through a wellbore and into a subterranean formation at a pressure sufficient to fracture the formation, wherein the viscoelastic fluid is the viscoelastic fluid according to claim 1.

27. The method of claim 26 wherein the viscoelastic fluid further contains a gas selected from air, nitrogen or carbon dioxide to provide an energized fluid or a foam.

## Patentansprüche

1. Viskoelastische Flüssigkeit, die Folgendes umfasst:
einen oder mehrere kationische oberflächenaktive Stoffe;
ein oder mehrere anionische Polymere oder einen oder mehrere anionische oberflächenaktive Stoffe, die Alkylketten aus 6 bis 18 Kohlenstoffatomen mit mindestens einer negativ geladenen Einheit aufweisen;
einen oder mehrere zwitterionische und/oder amphotere oberflächenaktive Stoffe; und
Wasser; worin der eine oder mehrere kationische oberflächenaktive Stoffe aus der Gruppe ausgewählt sind, die aus Folgenden besteht:
i) quartären Salzen, die die folgende Strukturformel aufweisen: 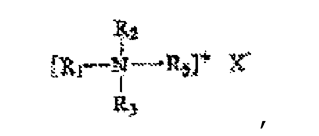 worin R₁ eine hydrophobe Einheit von Alkyl, Alkylarylalkyl, Alkoxyalkyl, Alkylaminoalkyl oder Alkylamidoalkyl ist, worin R₁ von 18 bis 30 Kohlenstoffatome aufweist und verzweigt oder geradkettig und gesättigt oder ungesättigt sein kann; R₂, R₃ und R₅ unabhängig aus der Gruppe ausgewählt sind, die aus einer aliphatischen Einheit, die 1 bis 30 Kohlenstoffatome aufweist, und einer aromatischen Einheit, die von 7 bis 30 Kohlenstoffatome aufweist, besteht; wobei die aliphatische Einheit verzweigt oder geradkettig und gesättigt oder ungesättigt ist;
worin X ein Gegenanion ist;
ii) Aminoxiden, die die folgende Strukturformel aufweisen: 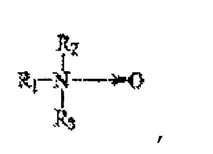 worin R₁, R₂ und R₃ wie vorstehend definiert sind; und
iii) Kombinationen davon;
worin der zwitterionische oberflächenaktive Stoff die folgende Strukturformel aufweist: 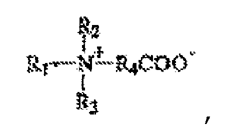 worin R₁, R₂ und R₃ wie vorstehend definiert sind; R₄ ein Kohlenwasserstoffrest mit einer Kettenlänge von 1 bis 4 ist;
und worin der amphotere oberflächenaktive Stoff die folgende Strukturformel aufweist: 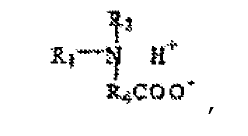 worin R₁, R₂ und R₄ wie vorstehend definiert sind.

2. Flüssigkeit nach Anspruch 1, worin der eine oder mehrere kationische oberflächenaktive Stoffe ein oder mehrere quartäre Salze sind.

3. Flüssigkeit nach Anspruch 2, worin das quartäre Salz Methylpolyoxyethylenoctadecanammoniumchlorid ist.

4. Flüssigkeit nach Anspruch 1, worin der eine oder mehrere kationische oberflächenaktive Stoffe aus der Gruppe ausgewählt sind, die aus
Methylpolyoxyethylenoctadecanammoniumchlorid, Methylpolyoxyethylencocoalkylammoniumchlorid und Isotridecyloxypropylpolyoxyethylenmethylammoniumchlorid besteht.

5. Flüssigkeit nach Anspruch 1, worin der eine oder mehrere kationische oberflächenaktive Stoffe zu 1 bis 40 Gew.-%, bezogen auf das Gewicht des aktiven oberflächenaktiven Stoffs, vorliegen.

6. Flüssigkeit nach Anspruch 1, worin der eine oder mehrere kationische oberflächenaktive Stoffe zu 5 bis 20 Gew.-%, bezogen auf das Gewicht des aktiven oberflächenaktiven Stoffs, vorliegen.

7. Flüssigkeit nach Anspruch 1, worin das eine oder mehrere anionische Polymere zu 0,01 bis 5 Gew.-%, bezogen auf das Gewicht der Flüssigkeit, vorliegen.

8. Flüssigkeit nach Anspruch 1, worin der eine oder mehrere zwitterionische oberflächenaktive Stoffe aus der Gruppe ausgewählt sind, die aus den folgenden Strukturformeln besteht: 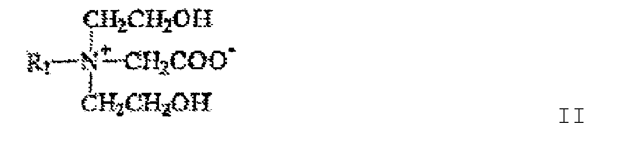 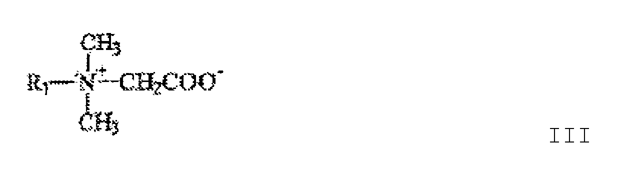 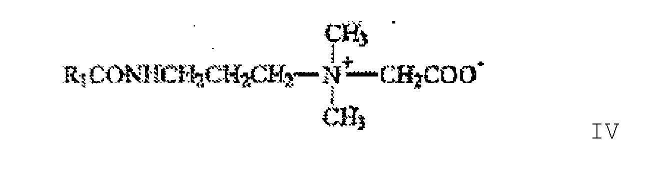 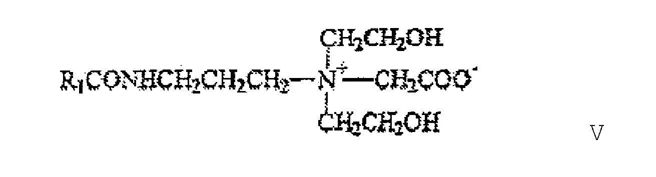 und Kombinationen davon.

9. Flüssigkeit nach Anspruch 1, worin der eine oder mehrere zwitterionische oberflächenaktive Stoffe Erucylbis-(2-hydroxyethyl)methylammoniumchlorid sind.

10. Flüssigkeit nach Anspruch 1, worin das Wasser zu 50 Gew.-% oder mehr, bezogen auf das Gewicht der Flüssigkeit, vorliegt.

11. Flüssigkeit nach Anspruch 1, worin das Wasser zu 70 Gew.-% oder mehr, bezogen auf das Gewicht der Flüssigkeit, vorliegt.

12. Flüssigkeit nach Anspruch 1, worin der eine oder mehrere kationische oberflächenaktive Stoffe und der eine oder mehrere zwitterionische und/oder amphotere oberflächenaktive Stoffe zu 0,1 bis 10 Gew.-%, bezogen auf das Gewicht der Flüssigkeit, vorliegen.

13. Flüssigkeit nach Anspruch 1, worin der eine oder mehrere kationische oberflächenaktive Stoffe und der eine oder mehrere zwitterionische und/oder amphotere oberflächenaktive Stoffe zu 0,25 bis 2 Gew.-%, bezogen auf das Gewicht der Flüssigkeit, vorliegen.

14. Flüssigkeit nach Anspruch 1, worin der eine oder mehrere kationische oberflächenaktive Stoffe und der eine oder mehrere zwitterionische und/oder amphotere oberflächenaktive Stoffe zu weniger als 2 Gew.-%, bezogen auf das Gewicht der Flüssigkeit, vorliegen.

15. Flüssigkeit nach Anspruch 1, die weiter eine Komponente umfasst, die aus der Gruppe ausgewählt ist, die aus organischen Säuren, organischen Säuresalzen, anorganischen Salzen und Kombinationen davon besteht.

16. Flüssigkeit nach Anspruch 15, worin die Komponente aus der Gruppe ausgewählt ist, die aus Kaliumchlorid und Trimethylammoniumchlorid besteht.

17. Flüssigkeit nach Anspruch 15, worin die Komponente zu 0,1 Gew.-% bis 10 Gew.-%, bezogen auf das Gewicht der Flüssigkeit, vorliegt.

18. Flüssigkeit nach Anspruch 1 oder 15, die weiter ein Stützmittel umfasst.

19. Flüssigkeit nach Anspruch 1, worin das eine oder mehrere anionische Polymere die folgende Strukturformel aufweisen: 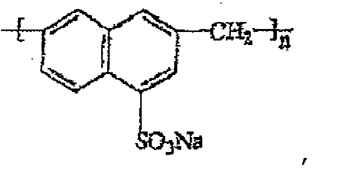 worin n eine ganze Zahl von 8 bis 100 ist.

20. Flüssigkeit nach Anspruch 1, worin das eine oder mehrere anionische Polymere die folgende Strukturformel aufweisen: 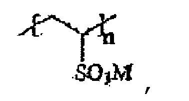 worin n eine ganze Zahl von 8 bis 100 ist.

21. Flüssigkeit nach Anspruch 1, worin das eine oder mehrere anionische Polymere zu 0,1 Gew.-% bis 5 Gew.-%, bezogen auf das Gewicht der Flüssigkeit, vorliegen.

22. Flüssigkeit nach einem der Ansprüche 19 und 20, worin das eine oder mehrere anionische Polymere zu 0,1 Gew.-% bis 5 Gew.-%, bezogen auf das Gewicht der Flüssigkeit, vorliegen.

23. Flüssigkeit nach Anspruch 1, worin der eine oder mehrere kationische oberflächenaktive Stoffe zu 1 bis 40 Gew.-%, bezogen auf das Gewicht des aktiven oberflächenaktiven Stoffs, vorliegen, worin das anionische Polymer zu 0,1 bis 5 Gew.-%, bezogen auf das Gewicht der Flüssigkeit, vorliegt, worin das Wasser zu 50 Gew.-% oder mehr, bezogen auf das Gewicht der Flüssigkeit, vorliegt, worin der eine oder mehrere kationische oberflächenaktive Stoffe und der eine oder mehrere zwitterionische und/oder amphotere oberflächenaktive Stoffe zu 0,1 bis 10 Gew.-%, bezogen auf das Gewicht der Flüssigkeit, vorliegen, wobei die Flüssigkeit weiter eine Komponente umfasst, die aus der Gruppe ausgewählt ist, die aus organischen Säuren, organischen Säuresalzen, anorganischen Salzen und Kombinationen davon besteht, worin die Komponente zu 0,1 Gew.-% bis 10 Gew.-%, bezogen auf das Gewicht der Flüssigkeit, vorliegt.

24. Flüssigkeit nach Anspruch 1 oder 21, worin R₁ eine Alkyl- oder Alkenylgruppe ist, die 18 bis 22 Kohlenstoffatome aufweist, und worin R₂, R₃ und R₅ unabhängig jeweils 1 bis 6 Kohlenstoffatome aufweisen.

25. Flüssigkeit nach Anspruch 1, worin der anionische oberflächenaktive Stoff die folgende Strukturformel hat, die aus der Gruppe ausgewählt ist, die aus Folgenden besteht:
R₆—[O(EO)ₐ(PO)_{b}]ₘ—SO₃⁻ Y⁺ 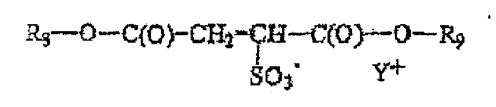
R₆—[O(EO)ₐ(PO)_{b}]ₘ—CH₂—C(O)—O⁻ Y⁺ 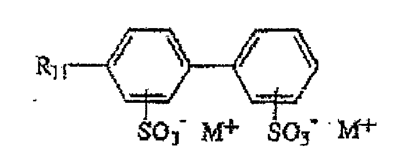
und Kombinationen davon;
worin R₆ aus der Gruppe ausgewählt ist, die aus Alkyl, Aryl, Alkaryl, Alkylarylalkyl, Arylalkyl, Alkylamidoalkyl, Alkylaminoalkyl besteht; worin die Alkylgruppe von 6 bis 18 Kohlenstoffatome aufweist; worin die Arylgruppe eine Phenyl-, Diphenyl-, Diphenylether- oder Naphthaleneinheit darstellt; worin der gesamte Kohlenstoffatomgehalt von R₆ nicht mehr als 18 Kohlenstoffatome beträgt; worin M aus der Gruppe ausgewählt ist, die aus Wasserstoff und Alkalimetall und -[R₇-(EO)ₐ(PO)_{b}(BO)_{c}]ₘ-O-]_{q}-P(O) (OM)ₐ besteht; worin Y ein Gegenion ist; worin EO ein Ethylenoxyrest ist; worin PO ein Propylenoxyrest ist; worin BO ein Butoxyrest ist; worin jeder der EO-, PO- und BO-Reste zufällig gemischt sein kann oder in einzelnen Blöcken vorliegen kann; worin a, b und c unabhängig ganze Zahlen von 0 bis 50 sind; worin "m" 0 oder 1 ist; worin "R₇" C₈- bis C₁₈-Alkylen ist; worin R₈ C₈- - C₁₈-Alkyl oder C₈- - C₁₈-Alkylamido ist; worin "R₉" C₁- bis C₄-Alkyl oder Y ist; worin R₁₀ C₄- - C₈-Alkyl ist; und worin "q" eine ganze Zahl von 1 bis 10 ist.

26. Verfahren zum Aufbrechen einer unterirdischen Formation, das den Schritt des Pumpens einer viskoelastischen Flüssigkeit durch ein Bohrloch und in eine unterirdische Formation bei einem Druck, der zum Aufbrechen der Formation ausreicht, umfasst, worin die viskoelastische Flüssigkeit die viskoelastische Flüssigkeit nach Anspruch 1 ist.

27. Verfahren nach Anspruch 26, worin die viskoelastische Flüssigkeit weiter ein Gas enthält, das aus Luft, Stickstoff oder Kohlendioxid ausgewählt ist, um eine angeregte Flüssigkeit oder einen Schaum bereitzustellen.

## Revendications

1. Fluide viscoélastique, comprenant :
un ou plusieurs tensioactifs cationiques ;
un ou plusieurs polymères anioniques ou un ou
plusieurs tensioactifs anioniques ayant des chaînes alkyles de 6 à 18 atomes de carbone avec au moins une fraction chargée négativement ;
un ou plusieurs tensioactifs zwitterioniques et/ou amphotériques ; et
de l'eau ; dans lequel l'un ou les plusieurs tensioactifs cationiques sont sélectionnés parmi le groupe constitué de
i) des sels quaternaires ayant la formule structurelle suivante : 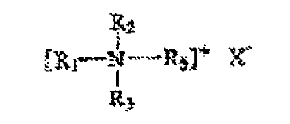 dans laquelle R₁ est une fraction hydrophobe d'alkyle, d'alkylarylalkyle, d'alkoxyalkyle, d'alkylaminoalkyle ou d'alkylamidoalkyle, dans laquelle R₁ a de 18 à 30 atomes de carbone et peut être ramifié ou linéaire et saturé ou insaturé ; R₂, R₃, et R₅ sont, indépendamment, sélectionnés parmi le groupe constitué d'une fraction aliphatique ayant de 1 à 30 atomes de carbone et une fraction aromatique ayant de 7 à 30 atomes de carbone ; la fraction aliphatique étant ramifiée ou linéaire et saturée ou insaturée ;
dans laquelle X est un contre-anion ;
ii) d'oxydes d'amine ayant la formule structurelle suivante : 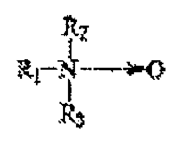 dans laquelle R₁, R₂, et R₃ sont tels que définis ci-dessus ; et
iii) de combinaisons de ceux-ci ;
dans lequel le tensioactif zwitterionique a la formule structurelle suivante : 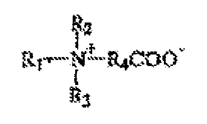 dans laquelle R₁, R₂, et R₃ sont tels que décrits ci-dessus ; R₄ est un radical hydrocarbyle avec une longueur de chaîne de 1 à 4 ;
et dans lequel le tensioactif amphotérique a la formule structurelle suivante : 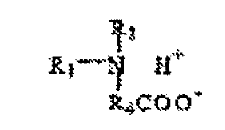 dans laquelle R₁, R₂ et R₄ sont tels que décrits ci-dessus.

2. Fluide selon la revendication 1, dans lequel l'un ou les plusieurs tensioactifs cationiques sont un ou plusieurs sels quaternaires.

3. Fluide selon la revendication 2, dans lequel le sel quaternaire est du chlorure de méthylpolyoxyéthylène octadécanammonium.

4. Fluide selon la revendication 1, dans lequel l'un ou les plusieurs tensioactifs cationiques sont sélectionnés parmi le groupe constitué de chlorure de méthylpolyoxyéthylène octadécanammonium, de chlorure de méthylpolyoxyéthylène cocoalkylammonium et de chlorure d'isotridécyloxypropyle polyoxyéthylène méthylammonium.

5. Fluide selon la revendication 1, dans lequel l'un ou les plusieurs tensioactifs cationiques sont présents dans une quantité allant de 1 à 40 % en masse en fonction de la masse de tensioactif actif.

6. Fluide selon la revendication 1, dans lequel l'un ou les plusieurs tensioactifs cationiques sont présents dans une quantité allant de 5 à 20 % en masse en fonction de la masse de tensioactif actif.

7. Fluide selon la revendication 1, dans lequel l'un ou les plusieurs polymères anioniques sont présents dans une quantité allant de 0,01 à 5 % en masse en fonction de la masse de fluide.

8. Fluide selon la revendication 1, dans lequel l'un ou les plusieurs tensioactifs zwitterioniques sont sélectionnés parmi le groupe constitué des formules structurelles suivantes : 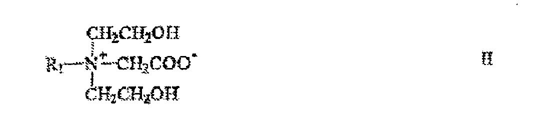 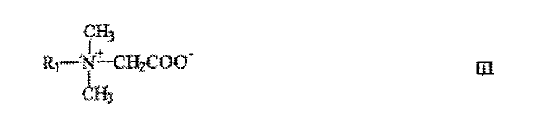 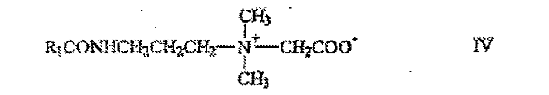 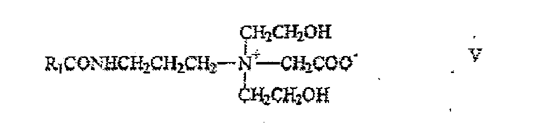 et de combinaisons de celles-ci.

9. Fluide selon la revendication 1, dans lequel l'un ou les plusieurs tensioactifs zwitterioniques sont le chlorure érucyle bis(2-hydroxyéthyl)méthylammonium.

10. Fluide selon la revendication 1, dans lequel l'eau est présente dans une quantité d'au moins 50 % en masse en fonction de la masse de fluide.

11. Fluide selon la revendication 1, dans lequel l'eau est présente dans une quantité d'au moins 70 % en masse en fonction de la masse de fluide.

12. Fluide selon la revendication 1, dans lequel l'un ou les plusieurs tensioactifs cationiques et l'un ou les plusieurs tensioactifs zwitterioniques et/ou amphotériques sont présents dans une quantité de 0,1 à 10 % en masse en fonction de la masse de fluide.

13. Fluide selon la revendication 1, dans lequel l'un ou les plusieurs tensioactifs cationiques et l'un ou les plusieurs tensioactifs zwitterioniques et/ou amphotériques sont présents dans une quantité de 0,25 à 2 % en masse en fonction de la masse de fluide.

14. Fluide selon la revendication 1, dans lequel l'un ou les plusieurs tensioactifs cationiques et l'un ou les plusieurs tensioactifs zwitterioniques et/ou amphotériques sont présents dans une quantité inférieure à 2 % en masse en fonction de la masse de fluide.

15. Fluide selon la revendication 1, comprenant en outre un composant sélectionné parmi le groupe constitué d'acides organiques, de sels d'acides organiques, de sels minéraux, et de combinaisons de ceux-ci.

16. Fluide selon la revendication 15, dans lequel le composant est sélectionné parmi le groupe constitué de chlorure de potassium et de chlorure de triméthylammonium.

17. Fluide selon la revendication 15, dans lequel le composant est présent dans une quantité de 0,1 % en masse à 10 % en masse en fonction de la masse de fluide.

18. Fluide selon la revendication 1 ou la revendication 15, comprenant en outre un agent de soutènement.

19. Fluide selon la revendication 1, dans lequel l'un ou les plusieurs polymères anioniques ont la formule structurelle suivante : 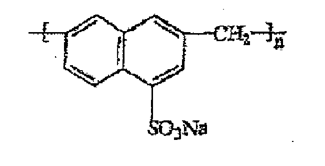 dans laquelle n est un entier de 8 à 100.

20. Fluide selon la revendication 1, dans lequel l'un ou les plusieurs polymères anioniques ont la formule structurelle suivante : 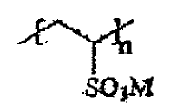 dans laquelle n est un entier de 8 à 100.

21. Fluide selon la revendication 1, dans lequel l'un ou les plusieurs polymères anioniques sont présents dans une quantité allant de 0,1 % en masse à 5 % en masse en fonction de la masse de fluide.

22. Fluide selon l'une quelconque des revendications 19 et 20, dans lequel l'un ou les plusieurs polymères anioniques sont présents dans une quantité allant de 0,1 % en masse à 5 % en masse en fonction de la masse de fluide.

23. Fluide selon la revendication 1, dans lequel l'un ou les plusieurs tensioactifs cationiques sont présents dans une quantité allant de 1 à 40 % en masse en fonction de la masse du tensioactif actif, dans lequel le polymère anionique est présent dans une quantité allant de 0,1 % en masse à 5 % en masse en fonction de la masse de fluide, dans lequel l'eau est présente dans une quantité d'au moins 50 % en masse en fonction de la masse de fluide, dans lequel l'un ou les plusieurs tensioactifs cationiques et l'un ou les plusieurs tensioactifs zwitterioniques et/ou amphotériques sont présents dans une quantité de 0,1 à 10 % en masse en fonction de la masse de fluide, le fluide comprenant en outre un composant sélectionné parmi le groupe constitué d'acides organiques, de sels d'acides organiques, de sels d'acides minéraux, et de combinaisons de ceux-ci, dans lequel le composant est présent dans une quantité de 0,1 % en masse à 10 % en masse en fonction de la masse de fluide.

24. fluide selon la revendication 1 ou la revendication 21, dans lequel R₁ est un groupe alkyle ou alcényle ayant de 18 à 22 atomes de carbone, et dans lequel R₂, R₃ et R₅, indépendamment, ont chacun de 1 à 6 atomes de carbone.

25. Fluide selon la revendication 1, dans lequel le tensioactif anionique a la formule structurelle suivante sélectionnée parmi le groupe constitué de :
R₆-[O(EO)ₐ(PO)b]ₘ-SO₃⁻ Y⁺ 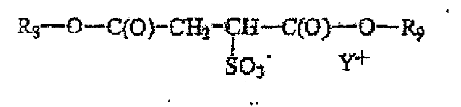
R₆—[O(EO)ₐ(PO)_{b}]ₘ—CH₂—C(O)—O⁻ Y⁺ 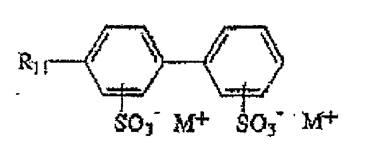
et de combinaisons de celles-ci ;
dans lequel R₆ est sélectionné parmi un groupe constitué d'alkyle, aryle, alkaryle, alkylarylalkyle, arylalkyle, alkylamidoalkyle, alkylaminoalkyle ; dans lequel le groupe alkyle a de 6 à 18 atomes de carbone ; dans lequel le groupe aryle représente une fraction phényle, diphényle, diphényléther, ou naphtalène ; dans lequel la teneur totale en atomes de carbone de R₆ est inférieure ou égale à 18 atomes de carbone ; dans lequel M est sélectionné parmi le groupe constitué d'hydrogène, de métal alcalin, et de -[R₇-(EO)ₐ(PO)_{b}(BO)_{c}]ₘ-O-]_{q}-P(O)(OM)ₐ ; dans lequel Y est un contre-ion ; dans lequel EO est un radical éthylèneoxy ; dans lequel PO est un radical propylèneoxy ; dans lequel BO est un radical butoxy ;
dans lequel chacun parmi les radicaux EO, PO et BO peut être mélangé de manière aléatoire ou dans des blocs discrets ; dans lequel a, b, et c sont, indépendamment, des entiers de 0 à 50 ; dans lequel
« m » est 0 ou 1 ; dans lequel « R₇ » est alkylène en C₈ à C₁₈ ; dans lequel R₈ est alkyle en C₈ - C₁₈ ou alkylamido en C₈ - C₁₈ ; dans lequel « R₉ » est alkyle en C₁ à C₄ ou Y ; dans lequel R₁₀ est alkyle en C₄ - C₈ ; et dans lequel « q » est un entier de 1 à 10.

26. Procédé de fracturation d'une formation souterraine, comprenant l'étape consistant à pomper un fluide viscoélastique au travers d'un puits de forage et dans une formation souterraine à une pression suffisante pour fracturer la formation, dans lequel le fluide viscoélastique est le fluide viscoélastique selon la revendication 1.

27. Procédé selon la revendication 26, dans lequel le fluide viscoélastique contient en outre un gaz sélectionné parmi de l'air, de l'azote ou du dioxyde de carbone pour fournir un fluide excité ou une mousse.
